# EUROPÄISCHE PATENTSCHRIFT

(11) **EP 2 783 484 B1**
(45) Veröffentlichungstag und Bekanntmachung des Hinweises auf die Patenterteilung: **02.03.2016**
(21) Anmeldenummer: 12806394.8
(22) Anmeldetag: 10.12.2012
(51) Int. Cl.: H04L 12/40, H04L 12/437

(54) **VERFAHREN ZUM BETREIBEN EINES KOMMUNIKATIONSNETZWERKES UND NETZWERKANORDNUNG**
METHOD FOR OPERATING A COMMUNICATION NETWORK, AND NETWORK ARRANGEMENT
PROCÉDÉ D'EXPLOITATION D'UN RÉSEAU DE COMMUNICATION ET SYSTÈME DE RÉSEAU

(30) Priorität: 09.01.2012 DE 102012000188
(43) Veröffentlichungstag der Anmeldung: 01.10.2014
(73) Patentinhaber: Siemens Aktiengesellschaft, 80333 München (DE)
(72) Erfinder: ZIRKLER, Andreas, 81671 München (DE); RIEDL, Johannes, 84030 Ergolding (DE); ARMBRUSTER, Michael, 81825 München (DE); FIEGE, Ludger, 85567 Grafing (DE); SCHMID, Thomas, 70771 Leinfelden-Echterdingen (DE)
(86) Internationale Anmeldenummer: PCT/EP2012/074897
(87) Internationale Veröffentlichungsnummer: WO 2013/104474

(56) Entgegenhaltungen:
- US-A1- 2008 107 050
- US-A1- 2011 026 411

## Beschreibung

Die vorliegende Erfindung betrifft ein Verfahren zum Betreiben eines Kommunikationsnetzwerkes und eine Netzwerkanordnung, welche mit dem vorgeschlagenen Verfahren arbeitet. Das Verfahren zum Betreiben kann insbesondere in einer Ethernet-Umgebung zum Einsatz kommen.

Kommunikationsnetzwerke finden immer breitere Anwendung zum Messen, Steuern und Regeln komplexer technischer Systeme. Beispielsweise werden zunehmend Netzwerke in Kraftfahrzeugen eingesetzt, um Fahrzeugsteuerungssysteme auszubilden. In entsprechenden komplexen und sicherheitsrelevanten technischen Systemen werden hohe Anforderungen an die Verfügbarkeit der als Netzwerkeinrichtungen vorgesehenen Steuerungselemente gestellt. Beim Ausfall von einzelnen Komponenten, wie beispielsweise Sensoren oder Steuereinrichtungen, darf dies nicht zum Ausfall des Gesamtsystems führen. Besonders sicherheitsrelevant sind Drive-by-Wire-Systeme, z.B. Steer-by-Wire-Systeme,, bei denen elektromotorisch über eine Netzwerkkopplung von Sensor-, Steuer- und Aktoreinrichtungen die Lenkradstellung in Radpositionen umgesetzt wird.

In der Vergangenheit wurden redundante Ausführungen besonders kritischer Komponenten eingesetzt, so dass im Fehlerfall die jeweilige Backup oder redundante Komponente, die jeweilige Aufgabe übernehmen kann. Bei mehreren redundanten Komponenten muss sichergestellt sein, dass nur eine der beiden oder mehreren Steuereinrichtungen, die jeweilige Steuerhoheit innehat. Außerdem dürfen nicht widersprüchliche Steuerungsbefehle für gleiche Steuerfunktionalitäten entstehen. Deshalb ist es notwendig, dass alle Steuerungskomponenten über dieselben Informationen oder Daten in dem Netzwerk verfügen.

Insofern müssen Fehler in Form von inkonsistenten Daten, die beispielsweise bei einer Datenübertragung über das verwendete Netzwerk korrumpiert sein können, erkannt werden. Eine Standard-Netzwerkumgebung, die weit verbreitet ist, basiert auf dem Ethernet-Protokoll. Die Verwendung von Ethernet-Infrastrukturen hat den Vorteil, dass standardisierte Netzwerkeinrichtungen und Verfahren zum Einsatz kommen können. In der Vergangenheit wurden jedoch auch proprietäre Datenbusse verwendet, um Steuerungskomponenten mit innerer Redundanz, also doppelt ausgelegter Funktionalität, miteinander zu verknüpfen.

Darüberhinaus ist es möglich, dass in dem Netzwerk eingesetzte Knoten fehlerhaft sind. Bekannt sind zum Beispiel Fehlertypen, bei denen eine Netzwerkeinrichtung mit hoher Frequenz Daten in das Netzwerk sendet, die keine für die anderen Steuereinrichtungen brauchbaren Daten enthalten. Man spricht auch von einem "Babbling Idiot". Die Netzwerkinfrastruktur kann dann derart durch hohe Datenraten belastet werden, dass echte Steuer- oder Sensordaten nicht mehr zwischen den noch funktionierenden Netzwerkeinrichtungen ausgetauscht werden können. Es ist wünschenswert, insbesondere solche Fehlverhalten in sicherheitsrelevanten Netzwerken zu behandeln und die vorliegenden Daten geeignet zu verarbeiten, um einen zuverlässigen Betrieb der nicht betroffenen Einrichtungen im Netzwerk zu gewährleisten.

In der Vergangenheit wurden Verfahren vorgeschlagen, bei denen der Datenaustausch zwischen vorgegebenen Kommunikationspartnern bandbreitenbegrenzt wurde. Defekte Netzwerk-Knoten können allerdings auch Datenpakete mit unzutreffenden Adressdaten erzeugen, was im Rahmen von einer dezidierten Bandbreitenbegrenzung nicht nicht in jeder Netzwerktopologie, insbesondere nicht in einer ringförmigen Netzwerktopologie, zufriedenstellend behandelt werden kann.

Außerdem sind Verfahren bekannt, die auf eine synchronisierte Kommunikation der Netzwerk-Knoten untereinander basieren. Dabei werden bestimmte Zeitschlitze für den Datenaustausch zwischen vorgegebenen Kommunikationspartnern definiert. Solche Zeitschlitzverfahren erfordern eine aufwendige Synchronisation und spezielle Hardware-Einrichtungen.

Aus den Dokumenten US 2011/026411 A1 und US 2008/107050 A1 sind jeweils technologische Hintergründe zum vorliegenden Thema gekannt.

Es ist daher eine Aufgabe der vorliegenden Erfindung, eine verbessertes Verfahren und/oder eine Netzwerkanordnung bereitzustellen.

Demgemäß wird ein Verfahren zum Betreiben eines Kommunikationsnetzwerks für an das Kommunikationsnetzwerk gekoppelte Netzwerkeinrichtungen vorgeschlagen. Das Verfahren umfasst:
Bereitstellen von Netzwerkeinrichtungen mit jeweils einer ersten Steuereinrichtung und einer der ersten Steuereinrichtung zugeordneten ersten Switch-Einrichtung sowie einer zweiten Steuereinrichtung und einer der zweiten Steuereinrichtung zugeordneten zweiten Switch-Einrichtung. Dabei haben die Switch-Einrichtungen jeweils einen Sende- und Empfangsport zum Senden und Empfangen von Daten über das Kommunikationsnetzwerk, einen ersten internen Sende- und Empfangsport zum Senden und Empfangen von Daten zwischen den Switch-Einrichtungen und einen zweiten internen Sende- und Empfangsport zum Senden und Empfangen von Daten zu der Steuereinrichtung.

Bei dem Verfahren erfolgt ein Priorisieren eines Datenaustausches an den ersten und zweiten internen Sende- und Empfangsports gegenüber einem Datenaustausch an den Sende- und Empfangsports zum Senden und Empfangen von Daten über das Kommunikationsnetzwerk, wobei insbesondere der zweite gegenüber dem ersten priorisiert ist.

Das insbesondere als Ethernet-Kommunikationsnetzwerk ausgestaltete Netzwerk führt beispielsweise zu einer ringförmigen Ausbildung oder Kopplung der Netzwerkeinrichtungen untereinander. Die redundante Ausführung der Netzwerkeinrichtung mit doppelten Switch- und Steuereinrichtungen sowie ermöglichter interner Kommunikation in der jeweiligen Netzwerkeinrichtung bietet einen sicheren und zuverlässigen Datentransport im Kommunikationsnetzwerk. Durch die Priorisierung des Datenaustausches innerhalb der Netzwerkeinrichtung gegenüber Daten, die von außerhalb, also über das angekoppelte Kommunikationsnetzwerk eintreffen, ist auch das Vorliegen eines Babbling Idiot im Netzwerk handhabbar. Ohne die vorgeschlagene Priorisierung würden die mit hoher Datenrate erzeugten sinnlosen Datenpakete die eigentlichen, beispielsweise mit Steuerdaten beladenen Datenpakete, überlagern und eine zuverlässige Kommunikation stören. Die Priorisierung, welche beispielsweise durch geeignete Queues bzw. Warteschlagen für die Datenpakete implementiert werden kann, gelangen dennoch zuverlässig die nicht von dem Babbling Idiot gesendeten Datenpakete an ihr Ziel.

Das Verfahren kann ferner umfassen: Priorisierung eines Datenaustauschs von den zweiten internen Empfangsports an die Sendeports zum Senden von Daten an das Kommunikationsnetzwerk gegenüber einem Datenaustausch an den ersten internen Sende- und Empfangsports. Durch diese erweiterte Priorisierung wird das gebildete Netzwerk mit den Netzwerkeinrichtungen noch robuster gegenüber Fehlern durch Babbling Idiots.

Die Priorisierung erfolgt dabei vorzugsweise nicht in Abhängigkeit von einem Dateninhalt der empfangenen Daten in den Switch-Einrichtungen , sondern wird Port-basiert durchgeführt. Beispielsweise könnten die von einem Babbling Idiot gesendeten Daten falsche Adress- oder Prioritätsinformationen enthalten, wodurch eine Priorisierung auf Basis von im Paket enthaltenen Informationen fehlschlagen würde. Dies wird durch die Port-basierte Priorisierung ausgeschlossen.

Das Kommunikationsnetzwerk selbst kann eine Ethernet-Infrastruktur umfassen. Die Switch-Einrichtung kann auch als Bridge- oder Router-Einrichtung bezeichnet werden. Bei Netzwerkeinrichtungen spricht man auch von Netzwerk-Knoten, Netzwerk-Komponenten oder Netzwerk-Elementen.

Als in den Netzwerkeinrichtungen vorgesehene Steuereinrichtungen kommen beispielsweise eine CPU, ein Mikroprozessor oder auch andere programmierbare Schaltkreise in Frage. Als Steuereinrichtung kann ferner eine Sensor- oder Aktoreinrichtung verstanden werden.

Das Kommunikationsnetzwerk oder Netzwerk-Protokoll sieht vorzugsweise Punkt-zu-Punkt-Verbindungen von einem Teilnehmer oder einer Netzwerkeinrichtung zu einer anderen vor. Dabei kann eine bidirektionale oder Duplex-Kommunikation möglich sein.

In Ausführungsformen umfasst das Verfahren ferner die Schritte:
Erzeugen von ersten Daten durch die erste Steuereinrichtung und zweiten Daten durch die zweite Steuereinrichtung, wobei die ersten Daten und die zweiten Daten durch eine vorgegebene Kodierung miteinander verknüpft sind;
Senden der ersten Daten von der ersten Steuereinrichtung über die zugeordneten Switch-Einrichtungen an die zweite Steuereinrichtung und Senden der zweiten Daten von der zweiten Steuereinrichtung über die zugeordneten Switch-Einrichtungen an die erste Steuereinrichtung, wobei die ersten und zweiten Daten die ersten und zweiten internen Sende- und Empfangsports durchlaufen;
Senden der ersten Daten und der zweiten Daten über einen ersten Kommunikationspfad von dem Sendeport der Switch-Einrichtung für die erste Steuereinrichtung zu dem Empfangsport der Switch-Einrichtung für die zweite Steuereinrichtung;
Senden der ersten Daten und der zweiten Daten über einen zweiten Kommunikationspfad von dem Sendeport der Switch-Einrichtung für die zweite Steuereinrichtung zu dem Empfangsport der Switch-Einrichtung für die erste Steuereinrichtung.

Dabei durchlaufen die Daten des ersten und des zweiten Kommunikationspfads dieselben Netzwerkeinrichtungen in entgegengesetzter Richtung.

Die ersten und zweiten Daten, welche über eine vorgegebene Kodierung miteinander verknüpft sind, können beispielsweise durch eine Bit-Inversion erzeugt sein. Die vorgegebene Kodierung lässt eine Konsistenzprüfung der beiden Daten miteinander zu. Ist beispielsweise durch den Datentransfer über das Netzwerk eines der Daten(pakete) gestört, kann dies durch Vergleich mit dem jeweils anderen Daten(paket) unter Berücksichtigung der jeweiligen Kodierung erkannt werden.

Insbesondere bei Ethernet basierten Kommunikationsnetzwerken ist eine bidirektionale Kommunikation (sog. Duplex-Kommunikation) möglich. Insofern verläuft der erste Kommunikationspfad vom Sendeport der Switch-Einrichtung des ersten Steuergeräts zum Empfangsport der Switch-Einrichtung des zweiten Steuergeräts, sowie der zweite Kommunikationspfad vom Sendeport der Switch-Einrichtung des zweiten Steuergeräts zum Empfangsport der Switch-Einrichtung des ersten Steuergeräts. Der erste Kommunikationspfad verläuft beispielsweise ringförmig über weitere Switch-Einrichtungen oder weitere Netzwerkeinrichtungen über das Kommunikationsnetzwerk. Der zweite Kommunikationspfad durchläuft die Netzwerkeinrichtungen in entgegengesetzter Richtung. Insofern wird ein redundanter Versand und eine Prüfung der Funktionsfähigkeit aller beteiligten Netzwerkeinrichtungen möglich. Vorzugsweise werden die ersten und zweiten Daten von der ersten zur zweiten Steuereinrichtung oder umgekehrt ausschließlich über die Switch-Einrichtung innerhalb der Netzwerkeinrichtung geführt.

Das Verfahren zum Betreiben eines Kommunikationsnetzwerks, insbesondere auf Ethernet-Basis führt zu einer Ringstruktur, wobei die sich ergebenden Kommunikationsrichtungen des Ethernet-Rings verwendet werden. Im Fehlerfall einer der mit einer Steuerungseinheit verbundenen Switch-Einrichtung einer Netzwerkeinrichtung, kann dabei nur eine der Richtungen betroffen sein, so dass nach wie vor ein konsistentes Datum bzw. Daten übermittelt wird/werden. Durch Vergleich der auf unterschiedlichen Kommunikationspfaden versendeten Daten, die insbesondere über eine Kodierung miteinander verknüpft sind, lässt sich eine flexible und zuverlässige Fehleranalyse durchführen. Man kann einfach die Steuerungskomponenten oder Einrichtungen eruieren, welche zu einem Fehler geführt haben. Diese werden vorzugsweise passiviert oder ausgeschaltet.

Daneben wird der Fehlerfall eines Babbling Idiots durch die Überprüfung der Datentransferrate und gegebenenfalls Blockieren des Empfangs derart behandelt, dass zumindest ein fehlerfrei übertragender Kommunikationspfad für nicht gestörte oder von einer defekten Einrichtung versendeten Daten vorliegt.

Bei Ausführungsformen des Verfahrens umfasst dasselbe ferner:
Senden der ersten Daten und der zweiten Daten über den Sendeport der Switch-Einrichtung für die erste Steuereinrichtung an den Empfangsport der Switch-Einrichtung für die zweite Steuereinrichtung über mindestens eine weitere Switch-Einrichtung einer weiteren Netzwerkeinrichtung mit einer ersten und zweiten Steuereinrichtung; und
Senden der ersten Daten und der zweiten Daten über den Sendeport der Switch-Einrichtung für die zweite Steuereinrichtung an den Empfangsport der Switch-Einrichtung für die erste Steuereinrichtung über mindestens eine weitere Switch-Einrichtung einer weiteren Netzwerkeinrichtung mit einer ersten und zweiten Steuereinrichtung.

Dabei werden in einer jeweiligen weiteren Switch-Einrichtung an einem Empfangsport für die zweite Steuereinrichtung der weiteren Switch-Einrichtung empfangene Daten an einen Sendeport für die erste Steuereinrichtung der weiteren Switch-Einrichtung weitergeleitet. An einem Empfangsport für die erste Steuereinrichtung der weiteren Switch-Einrichtung empfangene Daten werden an einen Sendeport für die zweite Steuereinrichtung der weiteren Switch-Einrichtung weitergeleitet.

Die unkodierten bzw. kodierten Daten werden somit von einem ersten Kanal, der von einer ersten Steuereinrichtung ausgeht, zu einem Kanal, welcher der zweiten Steuereinrichtung zugeordnet ist, versendet. Dies erfolgt auch umgekehrt, wodurch die sendende Steuerungskomponente feststellen kann, ob der jeweils andere Kanal, welcher der zweiten (redundanten) Steuereinrichtung zugeordnet ist, dasselbe Datenergebnis hat. Insofern kann festgestellt werden, ob die zugeordneten Ethernet-Switches bzw. die Switch-Einrichtungen zuverlässig funktionieren. Wird erkannt, dass mindestens einer der der Steuereinrichtung zugeordneten Switch-Einrichtungen fehlerhaft agiert, passiviert sich vorzugsweise die sendende Steuereinrichtung.

Das Verfahren kann ferner umfassen:
Vergleichen der ersten Daten mit den zweiten Daten in der ersten und/oder zweiten Steuereinrichtung zum Erzeugen eines Vergleichsergebnisses; und
Passivieren der Netzwerkeinrichtung in Abhängigkeit von dem Vergleichsergebnis.

Wird erkannt, dass die ersten und zweiten Daten nicht miteinander konsistent sind, das heißt, nicht durch die vorgegebene Kodierung miteinander verknüpft sind, lässt sich ein Fehler bei der Datenübertragung oder Erzeugung erkennen.

Das Verfahren kann außerdem umfassen:
erneutes Senden der ersten und der zweiten Daten über den ersten und den zweiten Kommunikationspfad.

Falls beispielsweise Daten in einem Kommunikationszyklus von der sendenden Steuereinrichtung nicht wieder erkannt oder empfangen werden, kann durch mehrfaches Versenden und Überprüfen auf korrekt empfangene Daten auf eine im Kommunikationspfad vorliegende fehlerhafte Netzwerk-Komponente geschlossen werden.

Bei dem Verfahren können ferner in einer weiteren Netzwerkeinrichtung die ersten Daten und die zweiten Daten an Eingangsports für unterschiedliche Steuereinrichtungen empfangen werden und die empfangenen Daten miteinander verglichen werden.

Vorzugsweise umfasst das Verfahren zum Betreiben der Netzwerkanordnung ferner das Anzeigen einer Fehlermeldung, falls verglichene erste Daten und zweite Daten nicht durch die vorgegebene Kodierung miteinander verknüpft sind.

Schließlich wird eine Netzwerkanordnung mit mehreren Netzwerkeinrichtungen, welche an ein Kommunikationsnetzwerk gekoppelt sind, vorgeschlagen. Eine jeweilige Netzwerkeinrichtung umfasst eine erste Steuereinrichtung und eine der ersten Steuereinrichtung zugeordnete erste Switch-Einrichtung. Ferner hat die jeweilige Netzwerkeinrichtung eine zweite Steuereinrichtung und eine der zweiten Steuereinrichtung zugeordnete zweite Switch-Einrichtung. Die Switch-Einrichtungen haben jeweils einen Sende- und Empfangsport zum Senden und Empfangen von Daten über das Kommunikationsnetzwerk, einen ersten internen Sende- und Empfangsport zum Senden und Empfangen von Daten zwischen den Switch-Einrichtungen und einen zweiten internen Sende- und Empfangsport zum Senden und Empfangen von Daten zu der Steuereinrichtung. Die Netzwerkeinrichtungen sind insbesondere eingerichtet, um ein Verfahren wie zuvor beschrieben durchzuführen.

Die Netzwerkanordnung ist insbesondere Teil eines Fahrzeugs.

Die Netzwerkeinrichtungen können Sensoreinrichtungen oder Aktoreinrichtungen sein. Als Sensoreinrichtungen sind Drehzahlsensoren, Brems- oder Schaltsteuerungseinrichtungen denkbar. Es können auch Steuereinrichtungen eingesetzt sein, die beispielsweise ein Drive-by-Wire ermöglichen. Dabei werden beispielsweise Lenk- oder Beschleunigungsimpulse elektronisch über das Netzwerk an entsprechende Aktoren übergeben, so dass die gewünschte Reaktion des Fahrzeugs einsetzt.

Insgesamt ergibt sich eine besonders zuverlässige Netzwerkanordnung, welche auch bei Störungen von Kommunikationskanälen sicher funktioniert. Die redundante ringförmige Kommunikationspfad-Einrichtung ermöglicht eine konsistente Steuergerätekommunikation und aufwandsgünstige Fehleranalyse und Korrektur und eine aufwandsgünstige Behandlung von Fehlern durch Babbling Idiots.

Bei weiteren Ausführungsformen der Netzwerkanordnung können ferner Einfach-Netzwerkeinrichtungen mit jeweils einer Steuereinrichtung und einer Switch-Einrichtung in der Netzwerkanordnung vorgesehen sein. Einfach-Netzwerkeinrichtungen haben dabei keine redundante Steuereinrichtung und können für weniger sicherheitsrelevante Funktionen vorgesehen werden.

In Ausführungsformen der Netzwerkanordnung umfasst wenigstens eine Switch-Einrichtung eine Klassifizierungseinrichtung, eine Queue-Einrichtung und/oder eine Scheduler-Einrichtung.

Eine Priorisierung von bestimmten Datenpaketen oder Datenpaketen auf vorgegebenen Datenpfaden, beispielsweise intern in einer Netzwerkeinrichtung, erfolgt beispielsweise durch die Implementierung einer Queue- oder Warteschlange. Bei einer Queue werden Datenobjekte, wie Datenpakete, in der Reihenfolge des Eintreffens aufgenommen und anschließend wieder ausgegeben. Dies erfolgt in einer Queue-Einrichtung. Die Klassifizierungseinrichtung kann eintreffende Datenpakete entsprechend klassifizieren und einer Prioritätsklasse zuordnen. Beispielsweise werden gemäß der Priorisierung Datenpakete, die von dem internen CPU-Port zur Switch-Einrichtung gelangen, mit einer höheren Priorität versehen als Daten, die von dem externen Port, also vom Kommunikationsnetzwerk zur Switch-Einrichtung gelangen. Die Klassifizierungseinrichtung ordnet die zu routenden oder zu switchenden Datenpakete in der Queue-Einrichtung entsprechend an. Die Scheduler-Einrichtung entnimmt die Datenpakete aus der Queue-Einrichtung und setzt sie über den jeweiligen Ausgangsport der Switch-Einrichtung ab.

Die Netzwerkeinrichtungen sind vorzugsweise jeweils als einzelner FPGA, ASIC, IC Chip, oder fest verdrahteter Mikroschaltkreis ausgeführt.

Weiterhin wird ein Computerprogrammprodukt vorgeschlagen, welches auf einer oder mehrerer programmgesteuerten Einrichtung die Durchführung des wie oben erläuterten Verfahrens zum Betreiben einer Netzwerkanordnung veranlasst.

Ein Computerprogramm-Produkt wie ein Computerprogramm-Mittel kann beispielsweise als Speichermedium, wie Speicherkarte, USB-Stick, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm-Produkt oder dem Computerprogramm-Mittel erfolgen. Als programmgesteuerte Einrichtung kommt insbesondere eine wie vorbeschriebene Netzwerkeinrichtung in frage.

Weitere mögliche Implementierungen der Erfindung umfassen auch nicht explizit genannte Kombinationen von zuvor oder im Folgenden bezüglich der Ausführungsbeispiele beschriebenen Verfahrensschritte, Merkmale oder Ausführungsformen des Verfahrens, der Netzwerkanordndung, der Netzwerkeinrichtung oder eines Netzwerk-Knotens. Dabei wird der Fachmann auch Einzelaspekte als Verbesserungen oder Ergänzungen zu der jeweiligen Grundform der Erfindung hinzufügen oder abändern.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Dabei zeigen:
- Fig. 1: eine schematische Darstellung einer ersten Ausführungsform einer Netzwerkanordnung;
- Fig. 2-6: schematische Darstellungen von Ausführungsformen von Switch-Einrichtungen mit Kommunikationsabläufen zur Erläuterung von Verfahrensaspekten einer Fehlerbehandlung;
- Fig. 7: eine schematische Darstellung einer zweiten Ausführungsform einer Netzwerkanordnung;
- Fig. 8: eine schematische Darstellung einer dritten Ausführungsform einer Netzwerkanordnung; und
- Fig. 9: eine schematische Darstellung einer vierten Ausführungsform einer Netzwerkanordnung.

In den Figuren sind gleiche oder funktionsgleiche Elemente mit denselben Bezugszeichen versehen worden, sofern nichts anderes angegeben ist.

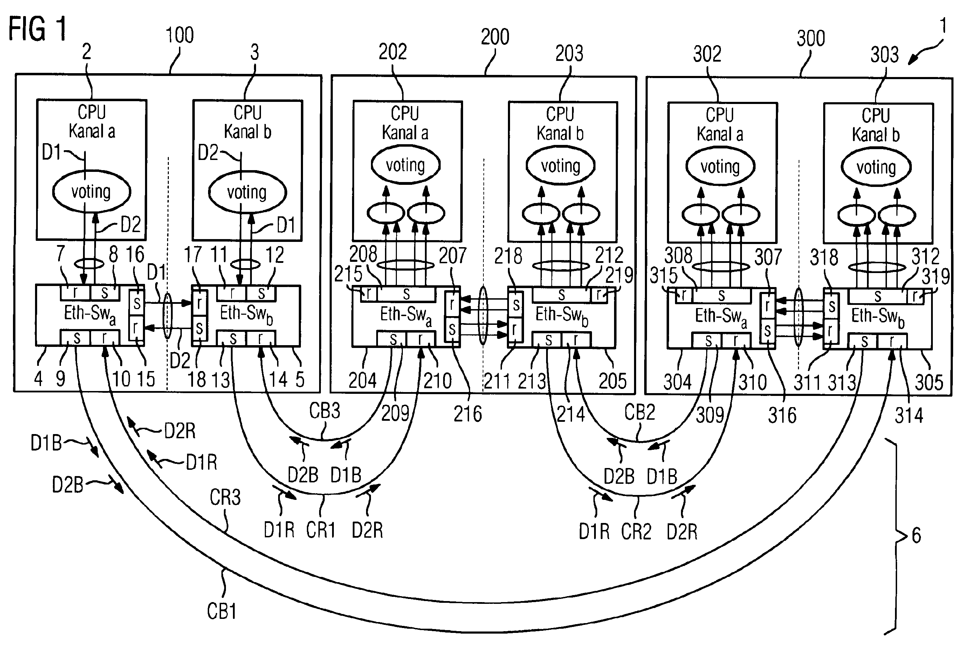

In der Fig. 1 ist eine schematische Darstellung einer ersten Ausführungsform einer Netzwerkanordnung dargestellt. Die Figuren dienen ferner, das Verfahren zum Betreiben der Netzwerkanordnung zu erläutern.

Die Fig. 1 zeigt eine Netzwerkanordnung 1, welche beispielsweise als Ethernet-Netzwerk in einem Fahrzeug eingesetzt werden kann. Dabei sind beispielhaft drei Netzwerkeinrichtungen 100, 200, 300 dargestellt. Es kann sich beispielsweise um Steuerungskomponenten handeln. Die Netzwerkeinrichtungen 100, 200, 300, welche im Folgenden auch als Netzwerk-Knoten oder Steuerungskomponenten bezeichnet werden, haben jeweils redundante Steuereinrichtungen 2, 3, 202, 203, 302, 303. Man kann die Steuereinrichtungen auch als CPUs bezeichnen. Die Netzwerkeinrichtungen 100, 200, 300 können auch als Teilnehmer des Netzwerks bezeichnet werden.

Die Steuereinrichtungen 2, 3, 202, 203, 302, 303 sind angepasst, um bestimmte Aufgaben oder Funktionen zu vollziehen. Dies kann beispielsweise eine Sensorerfassung oder ein Aktor sein. Man kann sie auch als CPUs oder Mikroprozessoren implementieren. Denkbar ist zum Beispiel, dass die Steuerungskomponente 100 zum Erfassen eines Pedalstandes oder einer Lenkbewegung im Fahrzeug eingerichtet ist. Es ist zum Beispiel denkbar, dass die Steuerungskomponente bzw. Netzwerkeinrichtung 100 ein Steuersignal bzw. Steuerdaten an eine weitere Steuerungskomponente im Netzwerk sendet. Dabei ist insbesondere bei sicherheitsrelevanten Anwendungen in Kraftfahrzeugen, beispielsweise beim Drive-by-Wire zu gewährleisten, dass die Steuerdaten an allen Netzwerk-Knoten konsistent vorliegen.

Die Steuerungskomponenten bzw. Netzwerk-Knoten oder Netzwerkeinrichtungen 100, 200, 300 sind mit redundanten Ethernet-Switch-Einrichtungen 4, 5, 204, 205, 304, 305 ausgestattet. Die Ethernet-Switch-Einrichtungen 4, 5, 204, 205, 304, 305 haben jeweils Sende- oder Ausgangsports 9, 13, 209, 213, 309, 313 und Empfangs- oder Eingangsports 10, 14, 210, 214, 310, 314 mit Hilfe derer eine Kopplung an das Kommunikationsnetzwerk 6 erfolgt. Außerdem haben die Switch-Einrichtungen 4, 5, 204, 205, 304, 305 erste interne Sende- oder Ausgangsports 16, 18, 216, 218, 316, 318 und erste interne Empfangs- oder Eingangsports 15, 17, 207, 211, 307, 311 zum internen Datenaustausch zwischen den Switch-Einrichtungen der jeweiligen Netzwerkeinrichtung 100, 200, 300. Zum Datenaustausch mit den Steuereinrichtungen 2, 3, 202, 203, 302, 303 haben die Switch-Einrichtungen 4, 5, 204, 205, 304, 305 zweite interne Sende- oder Ausgangsports 8, 12, 208, 212, 308, 312 und zweite interne Empfangs- oder Eingangsports 7, 11, 215, 219, 315, 319.

Die Netzwerkeinrichtung 100 umfasst dabei eine CPU 2 und eine zugeordnete Ethernet-Switch-Einrichtung 4. Die Ethernet-Switch-Einrichtung 4 hat einen Empfangsport 7 und einen Sendeport 8, welche mit der CPU 2 kommunikativ gekoppelt sind. Ein weiterer Sendeport 9 und Empfangsport 10 sind an das Netzwerk 6 zum Senden und Empfangen von Daten gekoppelt. Ähnlich hat die CPU 3 eine Ethernet-Switch-Einrichtung 5, die einen Empfangsport 11 und einen Sendeport 12 zum Koppeln an die CPU 3 hat. Die Ethernet-Switch-Einrichtung 5 hat ferner einen Sendeport 13 und Empfangsport 14 zum Ankoppeln an das Netzwerk 6. Darüber hinaus sind Sendeports 16, 18 und Empfangsports 15, 17 an den Ethernet-Switches 4, 5 vorgesehen, um eine Kopplung der beiden Switch-Einrichtungen 4, 5 untereinander vorzunehmen. Die beiden Switch-Einrichtungen 4, 5 sind dabei getrennt, beispielsweise als FPGA oder ASIC oder Mikrochip gefertigt.

Analog haben die Steuerungskomponenten 200 und 300 voneinander getrennte Switch-Einrichtungen 204, 205, 304, 305 mit Sende- und Empfangsports 204, 210, 213, 214, 304, 310, 313, 314 zur Kopplung an das Netzwerk 6. Die Netzwerkeinrichtungen 200, 300 können auch mit den gleichen Elementen wie die Netztwerkeinrichtung 100 ausgestattet sein, also mit Switch-Einrichtungen versehen sein, die weitere interne Ports aufweisen.

Netzwerk-Komponenten-intern erfolgt ein Abgleich der redundant erzeugten Steuerdaten D1 und D2. Die CPU 2 liefert Daten D1 und die CPU 3 liefert Daten D2. Dabei sind die Daten über eine Kodierung miteinander verknüpft. Das heißt, die Daten D1 ergeben sich aus den Daten D2 und umgekehrt über eine mathematische Operation. Denkbar ist beispielsweise eine einfache Bit-Inversion, so dass die Daten D1 das Inverse der Daten D2 und umgekehrt sind.

Der interne Konsistenzcheck in der Steuerungskomponente 100 erfolgt durch Erzeugen der Daten D1, Übergabe an den Ethernet-Switch 4 am Port 7 und die Weiterleitung über die Portkombination 16, 17 an den Ethernet-Switch 5, welcher die Daten D1 an die CPU 3 liefert. Analog werden die Daten D2 über die Ports 11, 18, 15 und 8 an die CPU 2 übermittelt. Insofern kann ein interner Konsistenzcheck durch die konsistente Kodierung der Daten D1 und D2 miteinander erfolgen. Sofern die Daten miteinander konsistent sind, das heißt, modulo der vorgegebenen Kodierung - beispielsweise eine Bit-Inversion - übereinstimmen, kann davon ausgegangen werden, dass der Datenempfang über die Ports 7 und 11, die Datensendung über die Ports 8 und 12, die Switch-Einrichtungen 4, 5 für den Datenaustausch zwischen eben diesen Ports, sowie auch die CPUs 2, 3 korrekt funktionieren. Liefert das Vergleichsergebnis hingegen eine Inkonsistenz der Daten D1 und D2 miteinander, deutet dies auf einen Fehler der CPUs 2, 3 oder der Switch-Einrichtungen 4, 5 hin, worauf eine mögliche Reaktion zur Datenkonsistenzsicherung die Passivierung - d.h. Deaktivierung - der Steuerungskomponente 100 ist.

Ähnliche Konsistenzprüfungen erfolgen in den Netzwerkeinrichtungen 200, 300, Die zwischen den beiden Switches 204, 205 bzw. 304, 305 übertragenen Daten sind in der Fig. 1 nicht mit Bezugszeichen versehen. Von oben nach unten werden jeweils vom Port 218 zum Port 207 Daten D2B und D1B übertragen. Vom Port 216 zum Port 211 werden die Daten D1R und D2R übertragen. Genauso werden vom Port 307 Daten vom Port 318 empfangen, die D2B und D1B entsprechen. Vom Port 311 werden Daten vom Port 316 empfangen, die D1R und D2R entsprechen.

Die Netzwerkanordnung 1 ist für ringförmige Kommunikationspfade ausgelegt. Durch die insbesondere bei einer Ethernet-Infrastruktur vorliegende Möglichkeit von Punkt-zu-Punkt-Verbindungen der Teilnehmer oder Netzwerkeinrichtungen untereinander, können zwei voneinander getrennte Kommunikationsringe entstehen, die sich nur die jeweiligen Switch-Einrichtungen teilen, dort aber empfangs- und sendeseitig keine gemeinsamen Ports verwenden. In dem Ausführungsbeispiel der Fig. 1 ergibt sich ein erster Kommunikationspfad, der aus den Segmenten CB1, CB2 und CB3 zusammengesetzt ist. Über diese Segmente CB1, CB2 und CB3 laufen die Daten D1 und D2, was mit Hilfe der Pfeile D1B und D2B angedeutet ist. Dabei steht der Zusatz B für den Kommunikationspfad B.

Ferner verläuft in entgegengesetzter Kommunikationsrichtung ein Kommunikationspfad, der aus den Segmenten CR1, CR2 und CR3 zusammengesetzt ist. Über diesen Pfad werden ebenfalls die Daten D1 und D2 gesendet, was durch die Pfeile D2R und D1R angedeutet ist. Dabei steht der Zusatz R für den Kommunikationspfad R.

Die Daten D1 und D2 werden somit über disjunkte Kommunikationspfade an alle im Netzwerk vorliegenden Steuerungskomponenten 201, 301 übermittelt. Jede CPU 202, 203, 302, 303 erhält die kodierten sowie unkodierten Daten D1, D2 über unterschiedliche Kommunikationspfade, nämlich die beiden logischen Ringe mit entgegengesetzter Kommunikationsrichtung. Es liegt dabei jedoch ein einziger Hardware-Ring vor. Jede CPU 202, 203, 302, 303 vergleicht die empfangenen Werte für die Daten D1, D2 über einen Kommunikationsweg oder -pfad.

Beispielsweise erhält die CPU 303 über den Kommunikationspfad CB1 die Daten D1B und D2B. An dem Sendeport 312 übergibt die Switch-Einrichtung 304 die Daten D1B und D2B, welche am Eingangsport 314 empfangen wurden, an die CPU 303 weiter. Dort kann ein Vergleich der Daten D1B und D2B erfolgen. Sind diese miteinander konsistent, spricht dies für einen fehlerfreien Kommunikationspfad CB1.

Die CPU 303 erhält ferner über den zweiten Kommunikationspfad, der sich aus den Segmenten CR1 und CR2 ergibt, die Daten D1R und D2R. Die Daten D1R und D2R werden von der Switch-Einrichtung 304 am Empfangsport 310 empfangen und an den Sendeport 312, welcher der CPU 303 zugeordnet ist, ausgegeben. Es kann erneut eine Konsistenzprüfung erfolgen. Darüber hinaus kann die CPU 303 nun einen Vergleich oder Voting der über den Ringpfad CB1 erhaltenen Daten sowie über den Ringpfad CR1 und CR2 erhaltenen Daten durchführen. Im ungestörten Fall sind sowohl die Daten D1R und D2R miteinander konsistent, sowie die Daten D1B und D2B, sowie die über CB1 und über CR1-CR2 empfangenen und einzeln als bereits konsistent festgestellten Daten. Daraus ergibt sich, dass die zu Grunde liegenden Daten D1 und D2, welche von der CPU 2 bzw. 3 erzeugt wurden, korrekt sind. Treten bei den Vergleichen oder den Votings der über CB1 und über CR1-CR2 empfangenen und einzeln als bereits konsistent festgestellten Daten in der Steuerungskomponente 3 bzw. den CPUs 302, 303 Inkonsistenzen auf, kann auf einen Kommunikationsfehler geschlossen werden.

Ähnliche Konsistenzprüfungen erfolgen in der Steuerungskomponente 201 bzw. den CPUs oder Steuereinrichtungen 202, 203. Falls eine der beteiligten Switch-Einrichtungen 4, 5, 204, 205, 304, 305 fehlerhaft arbeiten sollte oder ausfällt, kann ein entsprechender Netzwerkfehler erkannt werden, wenn die Daten D1, D2 wiederholt gesendet werden. In der Regel werden mehrere Kommunikationszyklen mit unterschiedlichen Daten unterschiedlicher Steuereinrichtungen auf dem Netzwerk 6 verschickt. Auf Grund anderer Daten, die in der Fig. 1 nicht dargestellt sind, können die jeweiligen Steuerungskomponenten 201, 301 feststellen, ob ihr eigener Switch 204, 205, 304, 305 defekt ist oder nicht. Insofern können verschiedene Fehlerszenarien erkannt und behandelt werden.

Durch die disjunkten Datenpfade CB1, CB2, CB3 und CR1, CR2, CR3, treten Fehler bei der Übertragung nur unabhängig voneinander auf. Durch die Ausgestaltung als Ethernet-Ring der Netzwerk-Knoten oder Komponenten 100, 201, 301, ist eine weitestgehend konsistente Kommunikation von Steuergeräten, die insbesondere redundante Steuereinrichtungen 2, 3 haben, gewährleistet.

Über die besonders sichere Kommunikation der Netzwerkeinrichtungen als Steuergerät untereinander hinaus kann ferner ein Babbling Idiot als Fehlerquelle behandelt werden. Bei einem Babbling Idiot ist eine der in dem Netzwerk gekoppelten Einrichtungen oder Knoten defekt und sendet mit hoher Datenrate sinnlose Datenpakete. Dadurch kann das gesamte Netzwerk bzw. die Netzwerkanordnung derart belastet werden, dass sinnvolle Informationen, wie beispielsweise Steuer- oder Statusinformationen, nicht mehr zuverlässig versendet und empfangen werden können. Ein Babbling Idiot kann dabei insbesondere Datenpakete in die Netzwerkeinrichtung, beispielsweise als Ethernet-Netzwerk, senden, die auch keine sinnvollen Ziel- oder Empfangsadressen haben. Insofern wird mit sinnlosen Daten das Netzwerk geflutet und möglicherweise blockiert.

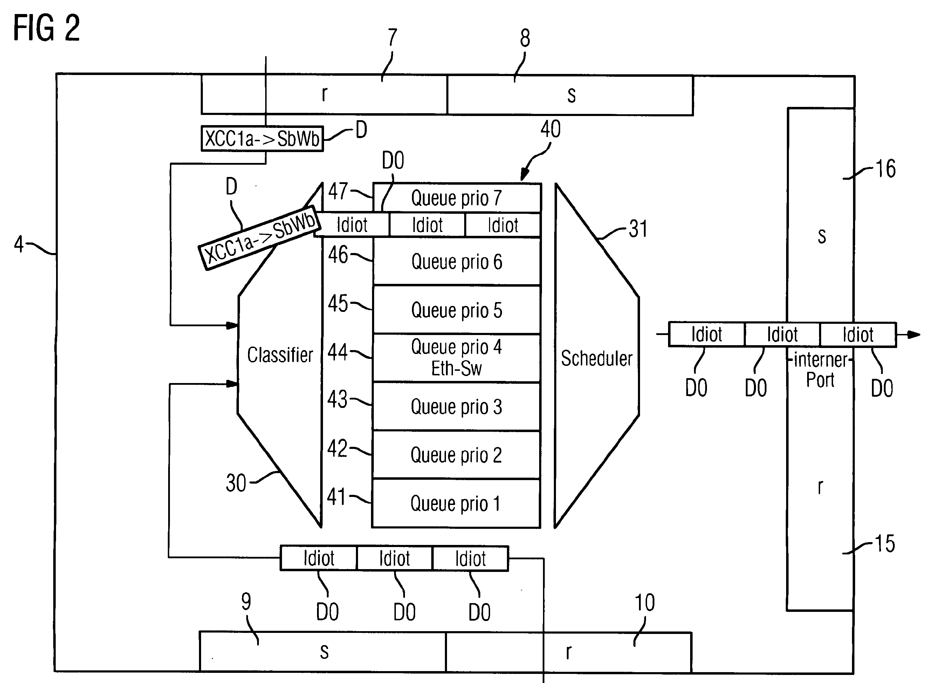

Um auch in dieser Fehlersituation noch einen zuverlässigen Datenverkehr zu ermöglichen, sind die Switch-Einrichtungen 4, 5, 204, 205, 304, 305 in den Netzwerkeinrichtungen 100, 200, 300 derart eingerichtet, dass interner Datenverkehr gegenüber Daten, die von extern, also aus dem Kommunikationsnetzwerk 6 eintreffen, priorisiert wird. Dies kann beispielsweise über einen Queuing-Prozess mit Prioritätsklassen in Abhängigkeit vom Eingangsport erfolgen. In den Fig. 2 bis 6 sind am Beispiel der Switch-Einrichtung 4 der ersten Netzwerkeinrichtung 100 mögliche Implementierungen für eine Priorisierung von bestimmten Datenpaketen erläutert.

Die Fig. 2 zeigt dabei eine Fehlersituation ohne eine Priorisierung von internen Datenpaketen. Die Fig. 2 zeigt dabei die Switch-Einrichtung 4 mit einem ersten internen Sendeport 16 und einem ersten internen Empfangsport 15, welche, wie in der Fig. 1 angedeutet ist, an die zweite Switch-Einrichtung 5 gekoppelt sind. Ein zweiter interner Empfangsport 7 und interner Sendeport 8, der auch im Folgenden als CPU-Port bezeichnet wird, ist an die Steuereinrichtung 2 gekoppelt. Ferner erkennt man in der Fig. 2 den Sendeport 9 und den Empfangsport 10, die auch als externe Ports bezeichnet werden.

Falls nun innerhalb der Netzwerkanordnung 1 ein Babbling Idiot auftritt, werden beispielsweise am externen Empfangsport 10 sinnlose Datenpakete empfangen. Diese sind mit D0 bezeichnet. In der Regel treten diese sinnlosen Datenpakete mit hoher Frequenz auf und belasten die Bandbreite des Netzwerks. Es ist eine konventionelle Queue-Einrichtung 40 mit einem vorgeschalteten Classifier oder einer Klassifizierungseinrichtung 30 und einer Scheduler-Einrichtung 31 dargestellt. Von dem CPU-Empfangsport 7 werden sinnvolle Steuerdaten D erhalten. Konventionellerweise werden die Datenpakete D0, D gemäß ihrer Prioritätsklasse, wovon hier sieben Klassen 41-47 vorliegen, weitergeleitet. Die Klassifizierungseinrichtung 30 legt beispielsweise gleiche Prioritätsklassen für die Datenpakete D und D0 fest. Im vorliegenden Beispielsfall ist dies die Prioritätsklasse 47. Üblicherweise erfolgt somit durch die Queue-Einrichtung und den Scheduler- bzw. die Scheduler-Einrichtung 31 eine Gleichbehandlung der sinnlosen Datenpakete D0 unter tatsächlichen sinnvollen Daten D. D.h., die mit hoher Datenrate eintreffenden sinnlosen Datenpakete D0 werden hauptsächlich am Sendeport 16 weitergeleitet. Im benachbarten Kanal b kann die Switch-Einrichtung, insbesondere weil die sinnlosen Daten D0 keine zuverlässigen Absendeadressen enthalten, nicht feststellen, wo der Babbling Idiot vorliegt.

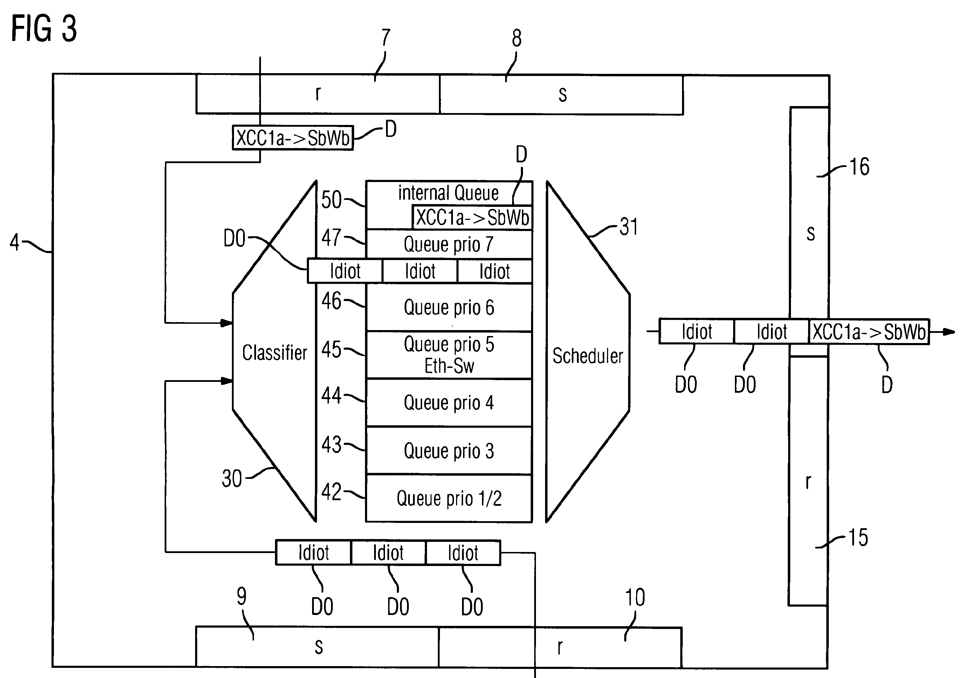

Es wird nun vorgeschlagen, bestimmte Datenpakete zu priorisieren. Insbesondere die interne Kommunikation zwischen der Switch-Einrichtung 4 und der ihr zugehörigen Steuereinrichtung 2 sowie der benachbarten internen Switch-Einrichtung 5 werden gegenüber den von extern empfangenen Datenpaketen priorisiert verarbeitet. Dieses ist in der Fig. 3 anhand eines Ausführungsbeispiels für ein Queuing und Scheduling dargestellt. Wie bereits in der Fig. 2 angedeutet, ist die Switch-Einrichtung 4 mit den CPU-Ports 7, 8, den internen Ports 15, 16 und den externen Ports 9, 10 ausgestattet. Es wird der beispielhafte Fall betrachtet, wo Daten D von der CPU 2 zum Überprüfen an die CPU 3 gesendet werden. Allerdings empfängt die Switch-Einrichtung 4 am externen Empfangsport 10 mit hoher Datenrate sinnlose Datenpakete D0, weil ein Babbling Idiot im Netzwerk vorhanden ist.

Sowohl die sinnlosen Daten D0 als auch die tatsächlichen sinnvollen oder sinnhaften Steuerdaten D gelangen zum Classifier 30. Die Queue-Einrichtung ist nun derart ausgestaltet, dass sieben Prioritätsklassen behandelt werden können. Die Scheduler-Einrichtung 31 datenstromabwärts setzt die durch die Queue-Einrichtung vorbereiteten Datenpakete über den Sendeport 16 ab. In üblichen Ethernet-Switch-Einrichtungen werden sieben Prioritätsklassen berücksichtigt. Um die vom CPU-Port 7 eintreffenden Datenpakete priorisiert zu berücksichtigen, werden die beiden niedrigsten Prioritätsklassen zu einer Priorität 1/2 zusammengefasst. Die Standard-Prioritätsklassen 3 bis 7 (43-47) werden dann um eine interne Prioritätsklasse, eine interne Queue, 50 ergänzt. Die Klassifizierungseinrichtung 30 klassifiziert die von dem CPU-Port 7 eintreffenden Daten D als interne Queue-Daten. Diese werden von dem Scheduler bevorzugt weitergeleitet. Trotz der beispielsweise mit Priorität 7 eintreffenden sinnlosen Datenpakete D0, welche mit hoher Datenrate vorliegen, gelingt ein zuverlässiges Weiterleiten der sinnhaften Daten D über den internen Ausgangsport 16 an die benachbarte Switch-Einrichtung 5 und damit an die CPU 3. Durch das Schaffen der internen Queue 50 kann trotz eines Babbling Idiot im Netzwerk die jeweilige Steueraufgabe zuverlässig erfüllt werden.

Die in der Fig. 3 nicht dargestellte (vgl. Fig. 1) vorliegende Steuereinrichtung 3 kann aus den ihr von der Steuereinrichtung bzw. CPU 2 gelieferten Daten schließen, ob beispielsweise die CPU 2 oder eine der Switch-Einrichtungen 4, 5 selbst fehlerhaft als Babbling Idiot arbeitet. Falls vom Kanal a, also der CPU 2, durch die Switch-Einrichtung 4 mit den priorisierten internen Queues interpretierbare Datenpakete D empfangen werden, wird geschlossen, dass die eigene Netzwerkeinrichtung 100 wahrscheinlich zuverlässig arbeitet. Sofern trotz der internen Priorisierung die CPU 3 von der CPU 2 keine sinnvollen Daten empfängt, kann geschlossen werden, dass der Fehler bzw. Babbling Idiot in der CPU 2 oder einer der Switch-Einrichtungen 4, 5 liegt. Insofern können entsprechende Fehlerbehandlungsmaßnahmen, wie beispielsweise eine Deaktivierung der Netzwerkeinrichtung oder der Steuereinrichtung 2, erfolgen.

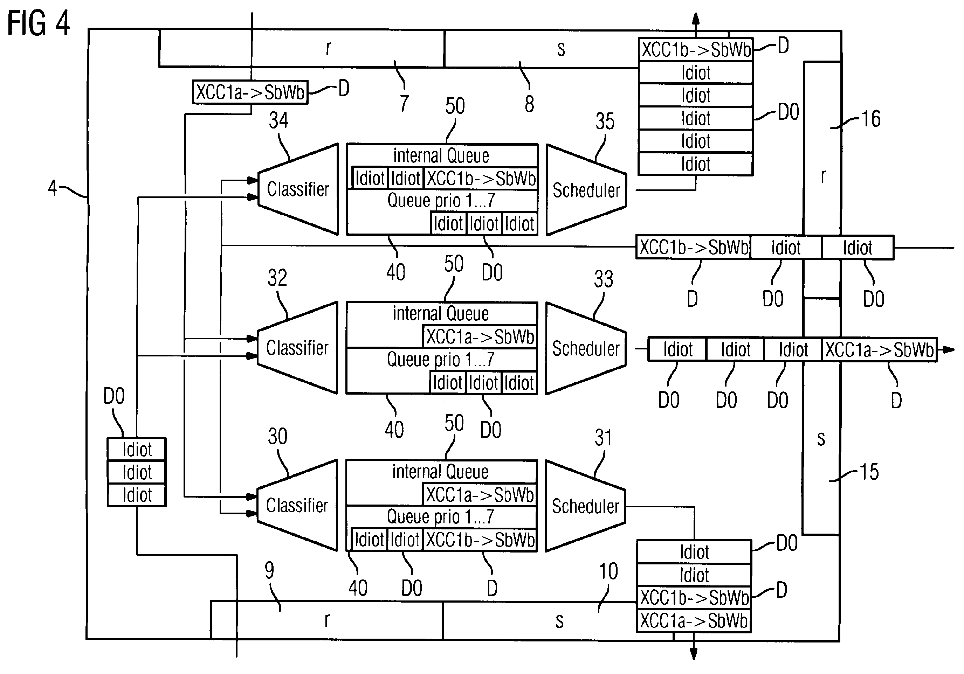

In der Fig. 4 ist eine weitere Ausführungsform für eine Switch-Einrichtung mit interner Priorisierung dargestellt. Die Switch-Einrichtung 4 ist mit drei internen Queues 50 ausgestattet, denen jeweils eine Klassifizierungseinrichtung 30, 32, 34 vorgeschaltet und eine Scheduler-Einrichtung 31, 33, 35 nachgeschaltet ist. In der Darstellung der Fig. 4 wird von einer unteren, einer mittleren und einer oberen Queue gesprochen.

Beispielsweise treffen von dem externen Port 9 sinnlose Daten D0 aus dem Kommunikationsnetzwerk ein. Diese werden den Klassifizierungseinrichtungen 32, 34 zugeleitet. Sinnvolle Daten D von der angekoppelten CPU 2 gelangen über den CPU-Port 7 zur unteren und mittleren Klassifizierungseinrichtung 30, 32. Daten, die von dem internen Port 16 eintreffen, werden zu der unteren Klassifizierungseinrichtung 30 und der oberen Klassifizierungseinrichtung 34 geleitet.

Es wird beispielsweise angenommen, dass die von der benachbarten Switch-Einrichtung (gleich Fig. 1) 5 erzeugten Daten sowohl sinnvolle Daten D wie auch sinnlose Daten D0 enthalten. Innerhalb der Queue-Einrichtungen 50 ist jeweils eine interne Queue vorgesehen, welche die höchste Weiterleitungspriorität hat, und Standardprioritäten 1-7. Durch die drei Stränge von Klassifizierungseinrichtungen 30, 32, 34, Queues 50 und Scheduler-Einrichtungen 31, 33, 35 erfolgt folgende Priorisierung:
CPU-Daten vom CPU-Empfangsport 7 werden gegenüber internen Empfangsdaten vom internen Port 16 priorisiert.
Ferner werden CPU-Daten vom CPU-Port 7 gegenüber Daten vom Kommunikationsnetzwerk am Port 9 priorisiert.
Außerdem werden interne Daten vom internen Empfangsport 16 gegenüber den vom Kommunikationsnetzwerk am Port 9 empfangenen Daten priorisiert.

Dies führt dazu, dass trotz der sinnlosen Datenpakete D insbesondere am Sendeport 8 dennoch die sinnvollen Daten D zuverlässig an die CPU 2 beispielsweise für einen Konsistenzcheck geliefert werden. Dasselbe gilt für die am Sendeport 15 vorliegenden Daten an die CPU 3.

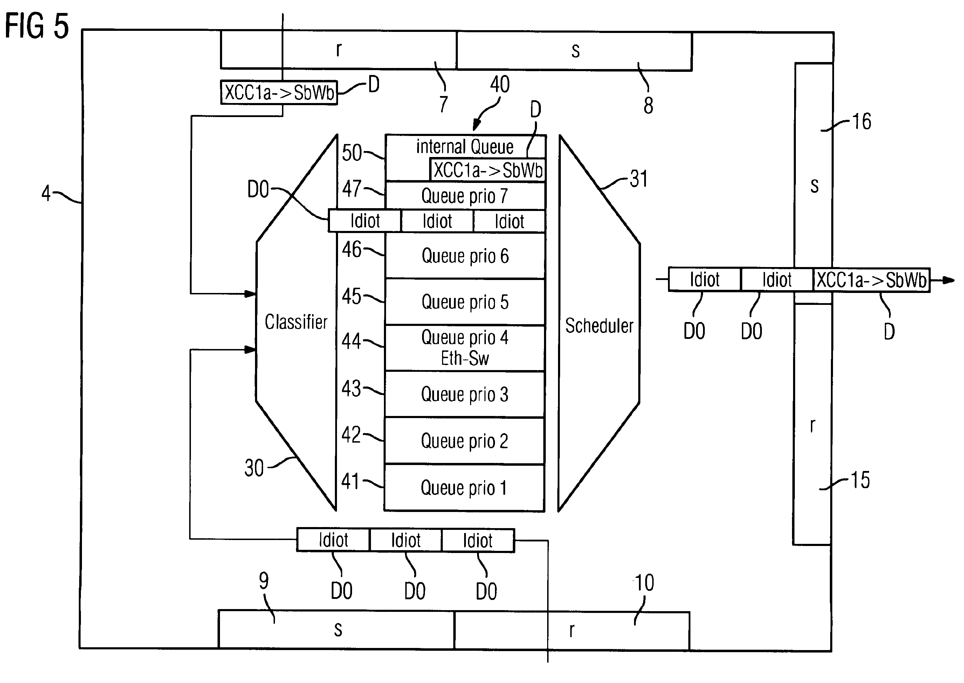

Fig. 5 zeigt noch eine weitere Ausführungsform für die Implementierung einer Priorisierung in der Switch-Einrichtung 4. Die Switch-Einrichtung 4 hat dabei im Wesentlichen dieselben Elemente, wie sie in der Fig. 2 dargestellt sind. Die Queue-Einrichtung 40 umfasst dabei die sieben Standard-Prioritätsklassen 41-47 und eine zusätzliche interne Prioritätsklasse 50. Die interne zusätzliche Prioritätsklasse hat dabei immer Vorrang. Die Gestaltung der Queue erfolgt im Wesentlichen durch die Klassifizierungseinrichtung 30, welche insbesondere auch in der Art eines Computerprogramms oder einer Routine implementiert sein kann. Dabei wird gegenüber konventionellen Klassifizierungsmodulen entweder, wie hier in der Fig. 5 angedeutet, eine zusätzliche Prioritätsklasse geschaffen oder, wie in den Fig. 3 und 4 angedeutet ist, bestimmte Prioritätsklassen zusammengefasst. Insgesamt ist eine Implementierung einfach durch Standard-Switch-Komponenten möglich. Eine Umparameterisierung, beispielsweise gemäß der in Fig. 5 oder den Fig. 3 und 4 dargestellten Priorisierungen, kann einfach erfolgen.

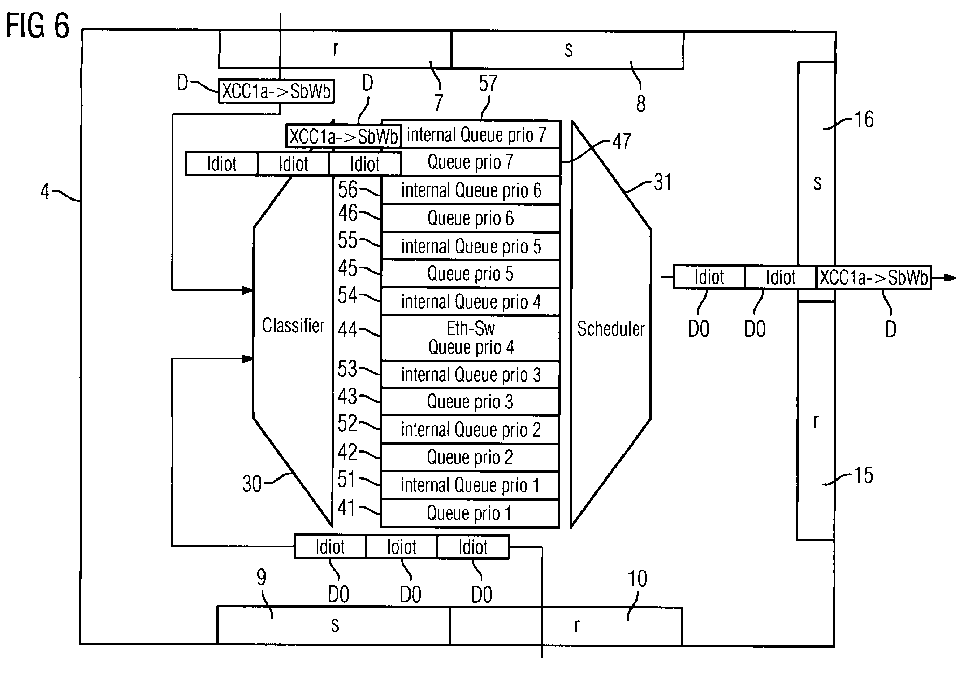

Schließlich wird in der Fig. 6 eine weitere Ausführungsform für eine Switch-Einrichtung 4 dargestellt bzw. Aspekte des Verfahrens zum Betreiben der Netzwerkanordnung hinsichtlich der Priorisierung angedeutet. Neben den bereits in den Fig. 2-5 dargestellten Elementen der Switch-Einrichtung 4 ist für jede konventionelle Prioritätsklasse 41-47 eine darüber priorisierte interne Queue-Prioritätsklasse 51-57 vorgesehen. In dem in der Fig. 6 dargestellten Beispiel sind die Daten D von der CPU 2, welche am Empfangsport 7 vorliegen, der Prioritätsklasse 7 zugeordnet. Dasselbe gilt für die sinnlosen Daten D0 am externen Empfangsport 10. Durch die Priorisierung oder Aufspaltung der Prioritätsklasse 7 in die interne Prioritätsklasse 57 und die konventionelle 47 erfolgt eine zuverlässige Weiterleitung insbesondere der sinnvollen Daten oder Steuerdaten D. Analog der Darstellung in der Fig. 6 können auch andere sinnvolle Daten, beispielsweise Prioritätsklassen 1-6 jeweils über die interne Queue 51-56 weitergeleitet werden.

Ferner ist eine Kombination der in der Fig. 6 angedeuteten Priorisierung mit der in der Fig. 4 dargestellten denkbar. Darüber hinaus können weitere Priorisierungsmuster implementiert werden. Dazu wird beispielsweise das Klassifizierungsmodul bzw. die Klassifizierungseinrichtung 30 entsprechend parameterisiert. Prinzipiell ist auch möglich, die Klassifizierung in Abhängigkeit von Dateninhalten der transferierten Datenpakete vorzunehmen. Bevorzugt erfolgt die Priorisierung allerdings ausschließlich Port-basiert.

Im Folgenden werden verschiedene Babbling-Idiot-Fehlerfälle anhand der in der Fig. 1 dargestellten Netzwerkanordnung 1 diskutiert. Dabei wird angenommen, dass entsprechende Priorisierungsvorgänge in den Switch-Einrichtungen 4, 5, 204, 205, 304, 305 ausgeführt werden.

Falls beispielsweise die Switch-Einrichtung 205 fehlerhaft ist und als Babbling Idiot sinnlose Datenpakete versendet, kommen an der CPU 202 über den Port 207 und 208 keine sinnvollen Datenpakete an. Innerhalb der Netzwerkeinrichtung 200 erkennt die CPU 202, dass trotz der Priorisierung des Datenverkehrs von den Ports 121 und 207 praktisch ausschließlich sinnlose Daten erhalten werden. Somit wird von der CPU 202 erkannt, dass entweder die Nachbar-CPU 203 oder die Switch-Einrichtung 204 oder 205 fehlerhaft arbeitet. Analog dazu empfängt die CPU 203 trotz der Priorisierung des Datenverkehrs von den Ports 108 und 211 praktisch ausschließlich sinnlose Daten. Demzufolge deaktiviert bzw. passiviert sich die Netzwerkeinrichtung 200, sodass im Folgenden das Netzwerk nicht mehr mit sinnlosen Datenpaketen belastet wird. Jetzt ist wieder eine zuverlässige Kommunikation zwischen den Netzwerkeinrichtungen 100 und 300 über CB1 und CR3 möglich.

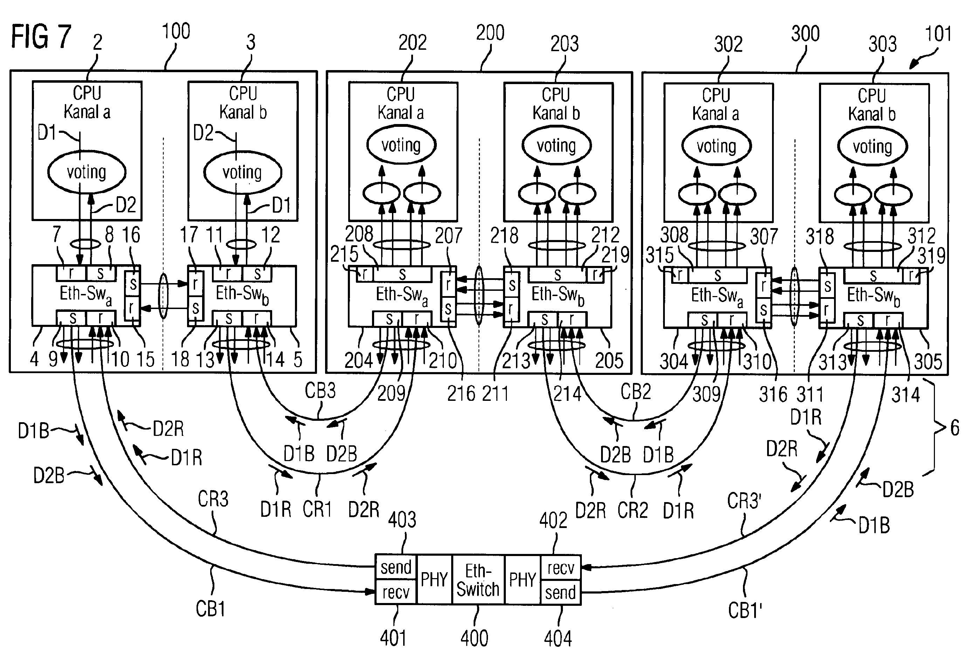

Die Fig. 7 zeigt ein zweites Ausführungsbeispiel für eine Netzwerkanordnung 101. Dabei umfasst die Netzwerkanordnung 101 im Wesentlichen dieselben Elemente, wie es in der Fig. 1 dargestellt ist. Allerdings ist das Kommunikationspfadsegment CB1 und CR3 durch eine einfache Switch-Einrichtung 400 unterbrochen. Die Switch-Einrichtung 400 hat dabei Empfangsports 401, 402 und Sendeports 403, 404. Es ergeben sich insofern die Kommunikationspfadsegmente CB1, CB1' und CR3, CR3'.

Falls nun diese Switch-Einrichtung 400, welche über keine internen Kontrollmechanismen verfügt, zum Babbling Idiot wird, kommen an den Ports 314 und 10 sinnlose Daten mit hoher Datenrate an. Durch die Priorisierung der internen Daten im Switch 4 und 305 wird in der Netzwerkeinrichtung 100 der Konsistenzcheck dennoch erfolgreich verlaufen. Innerhalb der Netzwerkeinrichtung 100, 200, 300 kann im Wesentlichen erkannt werden, wo der Babbling Idiot in der Netzwerkanordnung vorliegt. Insofern kann in jeder Netzwerkeinrichtung 100, 200, 300 eine Tabelle angelegt werden mit den funktionsfähigen CPUs im System. Nach dem in der Fig. 5 erläuterten Fehlerszenario, bei dem die Switch-Einrichtung 400 der Babbling Idiot ist, erkennt die Netzwerkeinrichtung 100 durch die interne Priorisierung, dass sie selbst nicht fehlerhaft arbeitet.

Denn durch die Priorisierung liegt an den Sendeports 8, 12 zuverlässig das jeweilige Datum der Nachbar-CPU 2, 3 an. Am Port 208 liegen hauptsächlich nicht interpretierbare Daten vor, die von der Switch-Einrichtung 205 intern priorisiert wurden und zum Port 207 geleitet sind. Am Port 212 liegen Daten vor, die von der Netzwerkeinrichtung 100 und 300 kommen, sowie auch die nicht interpretierbaren Daten von der Switch-Einrichtung 400. Am Port 308 werden praktisch nur nicht interpretierbare Daten an die CPU 302 geleitet, da von der Switch-Einrichtung 305 die sinnlosen Daten vom Switch 400 weitergeleitet werden. Am Port 312 liegen neben den nicht zu interpretierenden Daten vom Switch 400 auch Daten von den Netzwerkeinrichtungen 100 und 200 vor.

Insgesamt erkennt die Netzwerkeinrichtung 100, dass sie funktionsfähig ist, die Netzwerkeinrichtung 200, dass die Netzwerkeinrichtung 100 nicht als Babbling Idiot arbeitet, und die Nerzwerkeinrichtung 300 erkennt, dass die Netzwerkeinrichtung 200 nicht der Babbling Idiot ist.

Analog kann bei einem Babbling Simplex bzw. einer einfachen Switch-Einrichtung 400, wie es in der Fig. 7 dargestellt ist, ebenfalls erkannt werden, wo im Netzwerk der Babbling Idiot ist, wenn interne Konsistenzüberprüfungen beispielsweise in einer entsprechend ausgestatteten Netzwerkeinrichtung 200 oder 300 erfolgen. Es wird an einer Steuereinrichtung 2, 3, 202, 203, 302, 303 dann ein direkter Nachbar als Babbling Idiot identifiziert, wenn an einer CPU neben den interpretierbaren Daten der Nachbar-CPU in derselben Netzwerkanordnung ausschließlich nicht interpretierbare Daten eintreffen. Dann wird geschlossen, dass der am jeweils anderen Kanal angeschlossene Nachbar der Babbling Idiot ist.

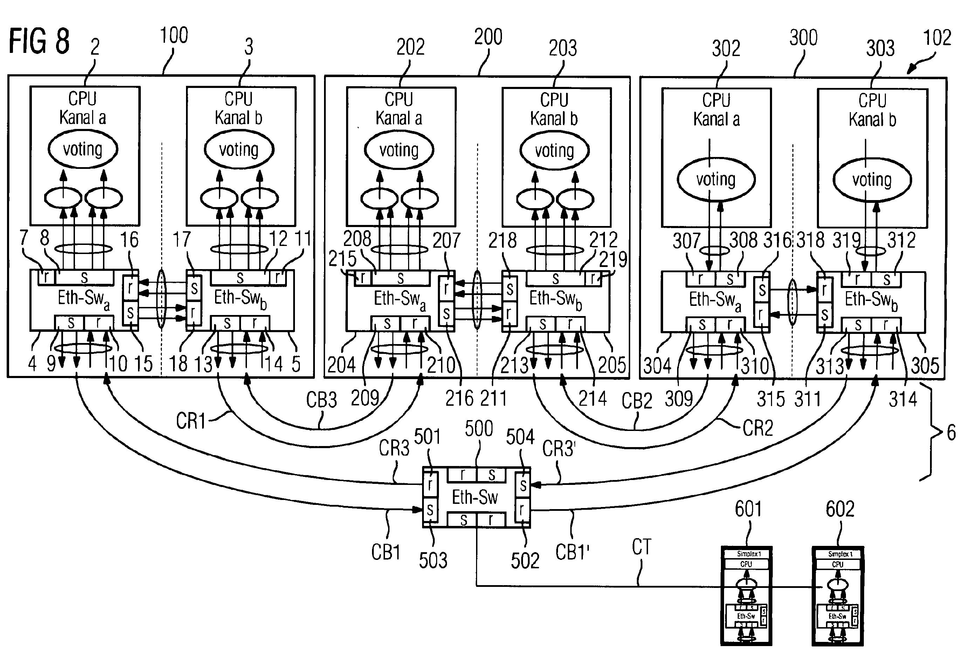

Fig. 8 zeigt noch eine weitere Ausführungsform einer Netzwerkanordnung 102. Dabei umfasst die Netzwerkanordnung 102 neben dem Switch 500 eine Stichleitung mit Simplex-Einrichtungen 601, 602. Für den Fall, dass beispielsweise die Simplex-Einrichtung 602, welche nicht über redundante Steuer- und Switch-Einrichtung verfügt, defekt ist, sendet sie mit hoher Datenrate nicht interpretierbare Daten ins Netzwerk an der Stichleitung CT. Liegen entsprechende Stichleitungen im Netzwerk vor, ist beispielsweise der koppelnde Switch 500 derart eingerichtet, dass durch ein Verfahren des Rate Limitings die Datenrate streng begrenzt wird, welche von der Stichleitung in die Ringleitung CB1, CB1', CB2, CB3 bzw. CR1, CR2, CR3, CR3' gelangen. Ferner kann die koppelnde Switch-Einrichtung 500 mit speziellen Sicherheitsmechanismen ausgeführt werden, die ein Babbling Idiot an der Stichleitung erkennt.

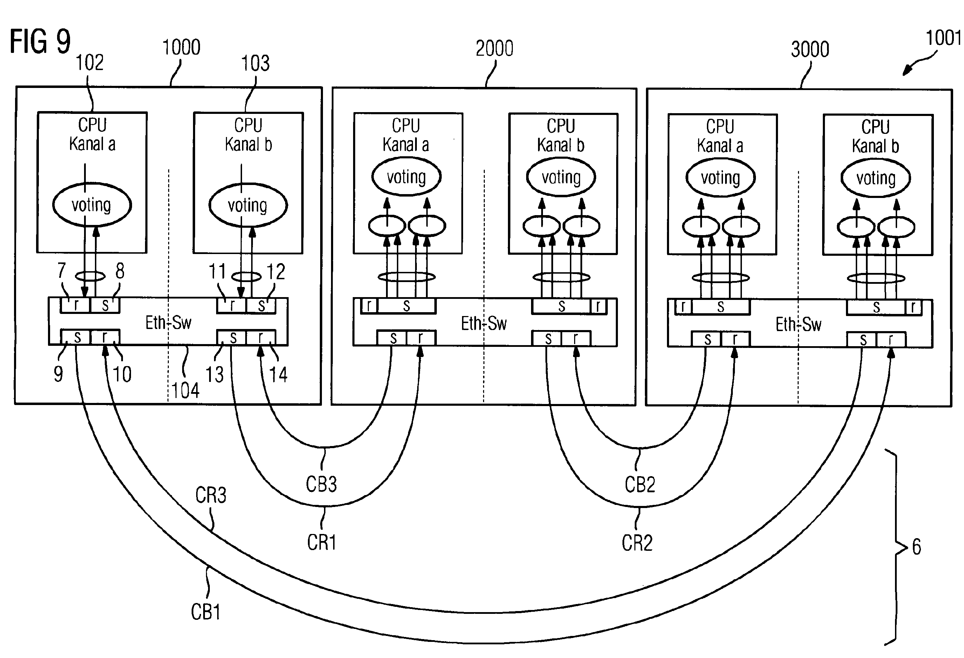

Fig. 9 zeigt eine weitere Ausführungsform einer Netzwerkanordnung 1001. Im Wesentlichen umfasst die Netzwerkanordnung dieselben Elemente, wie die in der Figur 1 dargestellte. Daher wird hier nur auf die abgewandelte Netzwerkeinrichtung 1000 eingegangen. Gegenüber den Netzwerkeinrichtungen 100, 200, 300 hat die Netzwerkeinrichtung 1000 eine einzelne Switch-Einrichtung 104, welche die Funktionen der Switch-Einrichtungen 4, 5 integriert. Darüber hinaus wird die Netzwerkanordnung 1001 betrieben, wie es zuvor in Bezug auf die anderen Ausführungsformen beschrieben wurde. Interner Datenverkehr wird gegenüber Daten vom Kommunikationsnetzwerk 6 priorisiert.

Insgesamt ergibt sich durch die Priorisierung eine besonders sichere Netzwerkanordnung und ein Verfahren zum Betreiben derselben. Die Priorisierung von internen Daten ermöglicht die Erkennung von Babbling Idiots im Netzwerk, so dass in den CPUs oder den Netzwerkeinrichtungen Tabellen geführt werden können, die die im Netzwerk vorliegenden funktionierenden Elemente aufführt.

Somit liefert das Verfahren sowie auch die vorgeschlagene Netzwerkanordnung mit ihrer Ringstruktur und einer Priorisierung der internen Ports der Netzwerkeinrichtungen eine höchst konsistente und zuverlässige Steuergerätekommunikation in sicherheitsrelevanten Anwendungen. Alle möglichen Einzelfehler führen entweder nicht dazu, dass in einer oder mehreren Netzwerkeinrichtungen keine konsistenten Daten erzeugt werden können, oder können innerhalb eines Kommunikationszyklus lokalisiert werden. Außerdem kann die Störung einer Netzwerkeinrichtung als Babbling Idiot, also unkontrolliertem Versenden von Daten mit hoher Datenrate in das Netzwerk nicht zu einem Ausfall der Komunikation führen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Netzwerkanordnung
- 2, 3: Steuereinrichtung
- 4, 5: Switch-Einrichtung
- 6: Kommunikationsnetzwerk
- 7, 10, 11, 14, 15, 17: Eingangsport
- 8, 9, 12, 13, 16, 18: Ausgangsport
- 101, 102: Netzwerkanordnung

- 30: Klassifizierungseinrichtung
- 31: Scheduler-Einrichtung

- 40: Queue
- 41 - 47: Prioritätsklasse

- 50: interne Queue
- 51 - 57: Prioritätsklasse

- 100, 200: Netzwerkeinrichtung
- 202, 203: Steuereinrichtung
- 204, 205: Switch-Einrichtung
- 208, 209, 212, 213 216, 218: Ausgangsport
- 207, 210, 211, 214, 215, 219: Eingangsport

- 300: Netzwerkeinrichtung
- 301: Netzwerkanordnung
- 302, 303: Steuereinrichtung
- 304, 305: Switch-Einrichtung
- 308, 309, 312, 313 316, 318: Ausgangsport
- 307, 310, 311, 314, 315, 319: Eingangsport

- 400: Switch-Einrichtung
- 401, 402: Eingangsport
- 403, 404: Ausgangsport

- 500: Switch-Einrichtung
- 501, 502: Eingangsport
- 503, 504: Ausgangsport

- 601, 602: Simplex-Netzwerkeinrichtung

- CB1 - CB3: Kommunikationspfadsegment
- CR1 - CR3: Kommunikationspfadsegment

- D1R, D1B: erste Daten
- D2R, D2B: zweite Daten
- D: sinnhafte Daten
- D0: sinnlose Daten

## Patentansprüche

1. Verfahren zum Betreiben einer Netzwerkanordnung (101) mit an ein Kommunikationsnetzwerk (6) gekoppelten Netzwerkeinrichtungen (100), umfassend:
Bereitstellen von Netzwerkeinrichtungen (1) mit jeweils einer ersten Steuereinrichtung (2) und einer der ersten Steuereinrichtung (2) zugeordneten ersten Switch-Einrichtung (4) und einer zweiten Steuereinrichtung (3) und einer der zweiten Steuereinrichtung (3) zugeordneten zweiten Switch-Einrichtung (5), wobei die Switch-Einrichtungen (4, 5) jeweils einen Sende- und Empfangsport (9, 10, 13, 14) zum Senden und Empfangen von Daten über das Kommunikationsnetzwerk (6), einen ersten internen Sende- und Empfangsport (15, 16, 17, 18) zum Senden und Empfangen von Daten zwischen den Switch-Einrichtungen (4, 5) und einen zweiten internen Sende- und Empfangsport (7, 8, 11, 12) zum Senden und Empfangen von Daten zu der Steuereinrichtung (2, 3) haben; und
Priorisieren eines Datenaustauschs von den ersten und zweiten internen Empfangsports (8, 11, 15, 17)) gegenüber einem Datenaustausch von den Empfangsports (10, 14) zum Senden und Empfangen von Daten über das Kommunikationsnetzwerk (6).

2. Verfahren nach Anspruch 1, ferner umfassend:
Priorisieren eines Datenaustauschs von den zweiten internen Empfangsports (7, 11) gegenüber einem Datenaustausch von den ersten internen Empfangsports (15, 17).

3. Verfahren nach Anspruch 1 oder 2, ferner umfassend:
Erzeugen von ersten Daten (D1) durch die erste Steuereinrichtung (2) und zweiten Daten (D2) durch die zweite Steuerreinrichtung (3), wobei die ersten Daten (D1) und die zweiten Daten (D2) durch eine vorgegebene Kodierung miteinander verknüpft sind;
Senden der ersten Daten (D1) von der ersten Steuereinrichtung (2) über die zugeordneten Switch-Einrichtungen (4, 5) an die zweite Steuereinrichtung (3) und Senden der zweiten Daten (D2) von der zweiten Steuereinrichtung (3) über die zugeordneten Switch-Einrichtungen (4, 5) an die erste Steuereinrichtung (2), wobei die ersten und zweiten Daten (D1, D2) die ersten und zweiten internen Sende- und Empfangsports (7, 8, 11, 12, 15, 16, 17, 18) durchlaufen;
Senden der ersten Daten (D1) und der zweiten Daten (D2) über einen ersten Kommunikationspfad (CB1, CB2, CB3) von dem Sendeport (9) der Switch-Einrichtung (4) für die erste Steuereinrichtung (2) zu dem Empfangsport (14) der Switch-Einrichtung (5) für die zweite Steuereinrichtung (3);
Senden der ersten Daten (D1) und der zweiten Daten (D2) über einen zweiten Kommunikationspfad (CR1, CR2, CR3) von dem Sendeport (13) der Switch-Einrichtung (5) für die zweite Steuereinrichtung (3) zu dem Empfangsport (10) der Switch-Einrichtung (4) für die erste Steuereinrichtung (2);
wobei die Daten des ersten und des zweiten Kommunikationspfads (CB1, CB2, CB3, CR1, CR2, CR3) dieselben Netzwerkeinrichtungen (200, 300) in entgegen gesetzter Richtung durchlaufen.

4. Verfahren nach Anspruch 3, ferner umfassend:
Senden der ersten Daten (D1) und der zweiten Daten (D2) über den Sendeport (9) der Switch-Einrichtung (4) für die erste Steuereinrichtung (2) an den Empfangsport (14) der Switch-Einrichtung (5) für die zweite Steuereinrichtung (3) über mindestens eine weitere Switch-Einrichtung (204) einer weiteren Netzwerkeinrichtung (200) mit einer ersten und zweiten Steuereinrichtung (202, 203); und
Senden der ersten Daten (D1) und der zweiten Daten (D2) über den Sendeport (13) der Switch-Einrichtung (5) für die zweite Steuereinrichtung (3) an den Empfangsport (10) der Switch-Einrichtung (4) für die erste Steuereinrichtung (2) über mindestens eine weitere Switch-Einrichtung (204, 205) einer weiteren Netzwerkeinrichtung (200) mit einer ersten und zweiten Steuereinrichtung (202, 203);
wobei in einer jeweiligen weiteren Switch-Einrichtung (204, 205) an einem Empfangsport (214) für die zweite Steuereinrichtung (203) der weiteren Switch-Einrichtung (204, 205) empfangene Daten an einen Sendeport (209) für die erste Steuereinrichtung (202) der weiteren Switch-Einrichtung (204, 205) weitergeleitet werden, und an einem Empfangsport (210) für die erste Steuereinrichtung (202) der weiteren Switch-Einrichtung (204, 205) empfangene Daten an einen Sendeport (213) für die zweite Steuereinrichtung (203) der weiteren Switch-Einrichtung (204, 205) weitergeleitet werden.

5. Verfahren nach einem der Ansprüche 1 - 4, wobei in mindestens einer Netzwerkeinrichtung (100) die erste und die zweite Switch-Einrichtung (4, 5) in einer Switch-Einrichtung (104) integriert sind.

6. Verfahren nach einem der Ansprüche 1 - 5, ferner umfassend: Vergleichen der ersten Daten (D1) mit den zweiten Daten (D2) in der ersten und/oder zweiten Steuereinrichtung (2, 3) zum Erzeugen eines Vergleichsergebnisses; und Passivieren der Netzwerkeinrichtung (1) in Abhängigkeit von dem Vergleichsergebnis.

7. Verfahren nach Anspruch 5 oder 6, ferner umfassend: erneutes Senden der ersten und der zweiten Daten (D1, D2) über den ersten und den zweiten Kommunikationspfad (CB1, CB2, CB3, CR1, CR2, CR3).

8. Verfahren nach einem der Ansprüche 5 - 7, ferner umfassend: in einer weiteren Netzwerkeinrichtung (200) Empfangen der ersten Daten (D1) und der zweiten Daten (D2) an Eingangsports (210, 214) für unterschiedliche Steuereinrichtungen (202, 203), und Vergleichen der empfangenen Daten.

9. Verfahren (1) nach einem der Ansprüche 1 - 8,
**dadurch gekennzeichnet,**
**dass** das Kommunikationsnetzwerk (6) ein Ethernet-Netzwerk ist.

10. Computerprogrammprodukt, welches die Durchführung eines Verfahrens nach einem der Ansprüche 1 - 9 auf einer oder mehrerer programmgesteuerter Einrichtungen (1, 100, 200, 300) veranlasst.

11. Datenträger mit einem gespeicherten Computerprogramm mit Befehlen, welche die Durchführung eines Verfahrens nach einem der Ansprüche 1 - 9 auf einer oder mehrerer programmgesteuerter Einrichtungen (1, 100, 200, 300) veranlasst.

12. Netzwerkanordnung (101) mit mehreren Netzwerkeinrichtungen (1, 201, 301), welche an ein Kommunikationsnetzwerk (6) gekoppelt sind, wobei eine jeweilige Netzwerkeinrichtung (1) eine erste Steuereinrichtung (2) und eine der ersten Steuereinrichtung (2) zugeordnete erste Switch-Einrichtung (4) und eine zweite Steuereinrichtung (3) und eine der zweiten Steuereinrichtung (3) zugeordnete zweite Switch-Einrichtung (5) umfasst, wobei die Switch-Einrichtungen (4, 5) jeweils einen Sende- und Empfangsport (9, 10, 13, 14) zum Senden und Empfangen von Daten über das Kommunikationsnetzwerk (6), einen ersten internen Sende- und Empfangsport (15, 16, 17, 18) zum Senden und Empfangen von Daten zwischen den Switch-Einrichtungen (4, 5) und einen zweiten internen Sende- und Empfangsport (7, 8, 11, 12) zum Senden und Empfangen von Daten zu der Steuereinrichtung (2, 3) haben; wobei die Netzwerkeinrichtungen (1, 100, 200, 300) eingerichtet sind, ein Verfahren nach einem der Ansprüche 1 - 9 durchzuführen.

13. Netzwerkanordnung (101) nach Anspruch 12, wobei in mindestens einer Netzwerkeinrichtung (100) die erste und die zweite Switch-Einrichtung (4, 5) in einer Switch-Einrichtung (104) integriert sind.

14. Netzwerkanordnung (101) nach Anspruch 12 oder 13,
**dadurch gekennzeichnet,**
**dass** mindestens eine Switch-Einrichtung (4) eine Klassifizierungseinrichtung (30), eine Queue-Einrichtung (40) und eine Scheduler-Einrichtung (31) umfasst.

15. Netzwerkanordnung (102) nach einem der Ansprüche 12 bis 14,
**dadurch gekennzeichnet, dass** Einfach-Netzwerkeinrichtungen (400) mit jeweils einer Steuereinrichtung und einer Switch-Einrichtung in der Netzwerkanordnung vorgesehen sind.

16. Netzwerkanordnung (101) nach einem der Ansprüche 12 - 14,
**dadurch gekennzeichnet,**
**dass** die Netzwerkeinrichtungen (1, 100, 200 ,300) jeweils als einzelner FPGA, ASIC, IC Chip, oder fest verdrahteter Mikroschaltkreis ausgeführt sind.

## Claims

1. Method for operating a network arrangement (101) having network devices (100) coupled to a communication network (6), comprising:
providing network devices (1) each having a first control device (2) and a first switch device (4) associated with the first control device (2) and a second control device (3) and a second switch device (5) associated with the second control device (3), the switch devices (4, 5) each having a transmitting and receiving port (9, 10, 13, 14) for transmitting and receiving data via the communication network (6), a first internal transmitting and receiving port (15, 16, 17, 18) for transmitting and receiving data between the switch devices (4, 5) and a second internal transmitting and receiving port (7, 8, 11, 12) for transmitting and receiving data to/from the control device (2, 3); and
prioritizing data interchange by the first and second internal receiving ports (8, 11, 15, 17) with respect to data interchange by the receiving ports (10, 14) for transmitting and receiving data via the communication network (6).

2. Method according to Claim 1, also comprising:
prioritizing data interchange by the second internal receiving ports (7, 11) with respect to data interchange by the first internal receiving ports (15, 17).

3. Method according to Claim 1 or 2, also comprising:
generating first data (D1) by the first control device (2) and second data (D2) by the second control device (3), the first data (D1) and the second data (D2) being linked to one another by means of predefined coding;
transmitting the first data (D1) from the first control device (2) to the second control device (3) via the associated switch devices (4, 5) and transmitting the second data (D2) from the second control device (3) to the first control device (2) via the associated switch devices (4, 5), the first and second data (D1, D2) passing through the first and second internal transmitting and receiving ports (7, 8, 11, 12, 15, 16, 17, 18);
transmitting the first data (D1) and the second data (D2) from the transmitting port (9) of the switch device (4) for the first control device (2) to the receiving port (14) of the switch device (5) for the second control device (3) via a first communication path (CB1, CB2, CB3);
transmitting the first data (D1) and the second data (D2) from the transmitting port (13) of the switch device (5) for the second control device (3) to the receiving port (10) of the switch device (4) for the first control device (2) via a second communication path (CR1, CR2, CR3);
the data on the first and second communication paths (CB1, CB2, CB3, CR1, CR2, CR3) passing through the same network devices (200, 300) in the opposite direction.

4. Method according to Claim 3, also comprising:
transmitting the first data (D1) and the second data (D2), via the transmitting port (9) of the switch device (4) for the first control device (2), to the receiving port (14) of the switch device (5) for the second control device (3) using at least one further switch device (204) of a further network device (200) having a first control device (202) and a second control device (203); and
transmitting the first data (D1) and the second data (D2), via the transmitting port (13) of the switch device (5) for the second control device (3), to the receiving port (10) of the switch device (4) for the first control device (2) using at least one further switch device (204, 205) of a further network device (200) having a first control device (202) and a second control device (203);
wherein, in a respective further switch device (204, 205), data received at a receiving port (214) for the second control device (203) of the further switch device (204, 205) are forwarded to a transmitting port (209) for the first control device (202) of the further switch device (204, 205), and data received at a receiving port (210) for the first control device (202) of the further switch device (204, 205) are forwarded to a transmitting port (213) for the second control device (203) of the further switch device (204, 205).

5. Method according to one of Claims 1-4, the first and second switch devices (4, 5) being integrated in one switch device (104) in at least one network device (100).

6. Method according to one of Claims 1-5, also comprising: comparing the first data (D1) with the second data (D2) in the first and/or second control device (2, 3) in order to generate a comparison result; and passivating the network device (1) on the basis of the comparison result.

7. Method according to Claim 5 or 6, also comprising: transmitting the first and second data (D1, D2) again via the first and second communication paths (CB1, CB2, CB3, CR1, CR2, CR3).

8. Method according to one of Claims 5-7, also comprising: in a further network device (200),
receiving the first data (D1) and the second data (D2) at input ports (210, 214) for different control devices (202, 203), and comparing the received data.

9. Method (1) according to one of Claims 1-8,
**characterized in that**
the communication network (6) is an Ethernet network.

10. Computer program product which causes a method according to one of Claims 1-9 to be carried out on one or more program-controlled devices (1, 100, 200, 300).

11. Data storage medium having a stored computer program with instructions which cause a method according to one of Claims 1-9 to be carried out on one or more program-controlled devices (1, 100, 200, 300).

12. Network arrangement (101) having a plurality of network devices (1, 201, 301) which are coupled to a communication network (6), a respective network device (1) comprising a first control device (2) and a first switch device (4) associated with the first control device (2) and a second control device (3) and a second switch device (5) associated with the second control device (3), the switch devices (4, 5) each having a transmitting and receiving port (9, 10, 13, 14) for transmitting and receiving data via the communication network (6), a first internal transmitting and receiving port (15, 16, 17, 18) for transmitting and receiving data between the switch devices (4, 5) and a second internal transmitting and receiving port (7, 8, 11, 12) for transmitting and receiving data to/from the control device (2, 3); the network devices (1, 100, 200, 300) being set up to carry out a method according to one of claims 1-9.

13. Network arrangement (101) according to Claim 12, the first and second switch devices (4, 5) being integrated in one switch device (104) in at least one network device (100).

14. Network arrangement (101) according to Claim 12 or 13,
**characterized in that**
at least one switch device (4) comprises a classification device (30), a queue device (40) and a scheduler device (31).

15. Network arrangement (102) according to one of Claims 12 to 14,
**characterized in that** simple network devices (400) each having a control device and a switch device are provided in the network arrangement.

16. Network arrangement (101) according to one of Claims 12-14,
**characterized in that**
the network devices (1, 100, 200, 300) are each in the form of an individual FPGA, ASIC, IC chip or a hard-wired microcircuit.

## Revendications

1. Procédé d'exploitation d'un système de réseau (101) avec des dispositifs de réseau (100) couplés à un réseau de communication (6), comprenant:
la mise à disposition de dispositifs de réseau (1) avec chaque fois un premier dispositif de commande (2) et un premier dispositif de commutation (4) associé au premier dispositif de commande (2) et un deuxième dispositif de commande (3) et un deuxième dispositif de commutation (5) associé au deuxième dispositif de commande (3), dans lequel les dispositifs de commutation (4, 5) comportent chacun un port d'émission et de réception (9, 10, 13, 14) pour l'envoi et la réception de données via le réseau de communication (6), un premier port d'émission et de réception interne (15, 16, 17, 18) pour l'envoi et la réception de données entre les dispositifs de commutation (4, 5) et un deuxième port d'émission et de réception interne (7, 8, 11, 12) pour l'envoi et la réception de données avec le dispositif de commande (2, 3); et
la priorisation d'un échange de données à partir des premiers et des deuxièmes ports de réception internes (8, 11, 15, 17) par rapport à un échange de données à partir des ports de réception (10, 14) pour l'envoi et la réception de données via le réseau de communication (6).

2. Procédé selon la revendication 1, comprenant en outre:
la priorisation d'un échange de données à partir des deuxièmes ports de réception internes (7, 11) par rapport à un échange de données à partir des premiers ports de réception internes (15, 17).

3. Procédé selon la revendication 1 ou 2, comprenant en outre:
la production de premières données (D1) par le premier dispositif de commande (2) et de deuxièmes données (D2) par le deuxième dispositif de commande (3), dans lequel les premières données (D1) et les deuxièmes données (D2) sont liées les unes aux autres par un codage prédéterminé;
l'envoi des premières données (D1) du premier dispositif de commande (2) via les dispositifs de commutation associés (4, 5) au deuxième dispositif de commande (3) et l'envoi des deuxièmes données (D2) du deuxième dispositif de commande (3) via les dispositifs de commutation (4, 5) au premier dispositif de commande (2), dans lequel les premières et les deuxièmes données (D1, D2) traversent les premiers et les deuxièmes ports d'émission et de réception internes (7, 8, 11, 12, 15, 16, 17, 18);
l'envoi des premières données (D1) et des deuxièmes données (D2) via un premier chemin de communication (CB1, CB2, CB3) du port d'émission (9) du dispositif de commutation (4) pour le premier dispositif de commande (2) au port de réception (14) du dispositif de commutation (5) pour le deuxième dispositif de commande (3);
l'envoi des premières données (D1) et des deuxièmes données (D2) via un deuxième chemin de communication (CR1, CR2, CR3) du port d'émission (13) du dispositif de commutation (5) pour le deuxième dispositif de commande (3) au port de réception (10) du dispositif de commutation (4) pour le premier dispositif de commande (2);
dans lequel les données du premier et du deuxième chemins de communication (CB1, CB2, CB3, CR1, CR2, CR3) traversent les mêmes dispositifs de réseau (200, 300) en direction inverse.

4. Procédé selon la revendication 3, comprenant en outre:
l'envoi des premières données (D1) et des deuxièmes données (D2) via le port d'émission (9) du dispositif de commutation (4) pour le premier dispositif de commande (2) au port de réception (14) du dispositif de commutation (5) pour le deuxième dispositif de commande (3) via au moins un autre dispositif de commutation (204) d'un autre dispositif de réseau (200) avec un premier et un deuxième dispositifs de commande (202, 203); et
l'envoi des premières données (D1) et des deuxièmes données (D2) via le port d'émission (13) du dispositif de commutation (5) pour le deuxième dispositif de commande (3) au port de réception (10) du dispositif de commutation (4) pour le premier dispositif de commande (2) via au moins un autre dispositif de commutation (204, 205) d'un autre dispositif de réseau (200) avec un premier et un deuxième dispositifs de commande (202, 203);
dans lequel dans un autre dispositif de commutation respectif (204, 205), des données reçues à un port de réception (214) pour le deuxième dispositif de commande (203) de l'autre dispositif de commutation (204, 205) sont retransmises à un port d'émission (209) pour le premier dispositif de commande (202) de l'autre dispositif de commutation (204, 205), et des données reçues à un port de réception (210) pour le premier dispositif de commande (202) de l'autre dispositif de commutation (204, 205) sont retransmises à un port d'émission (213) pour le deuxième dispositif de commande (203) de l'autre dispositif de commutation (204, 205).

5. Procédé selon l'une quelconque des revendications 1 à 4, dans lequel le premier et le deuxième dispositifs de commutation (4, 5) sont intégrés en un dispositif de commutation (104) dans au moins un dispositif de réseau (100).

6. Procédé selon l'une quelconque des revendications 1 à 5, comprenant en outre:
la comparaison des premières données (D1) avec les deuxièmes données (D2) dans le premier et/ou dans le deuxième dispositif de commande (2, 3) pour produire un résultat de la comparaison, et
la passivation du dispositif de réseau (1) en fonction du résultat de la comparaison.

7. Procédé selon la revendication 5 ou 6, comprenant en outre:
un nouvel envoi des premières et des deuxièmes données (D1, D2) via le premier et le deuxième chemins de communication (CB1, CB2, CB3, CR1, CR2, CR3).

8. Procédé selon l'une quelconque des revendications 5 à 7, comprenant en outre:
dans un autre dispositif de réseau (200), la réception des premières données (D1) et des deuxièmes données (D2) à des ports de réception (210, 214) pour différents dispositifs de commande (202, 203), et
la comparaison des données reçues.

9. Procédé (1) selon l'une quelconque des revendications 1 à 8, **caractérisé en ce que** le réseau de communication (6) est un réseau Ethernet.

10. Produit de programme informatique, qui réalise la mise en oeuvre d'un procédé selon l'une quelconque des revendications 1 à 9 sur un ou plusieurs dispositifs commandés par programme (1, 100, 200, 300).

11. Support de données avec un produit de programme informatique mémorisé comprenant des instructions, qui réalisent la mise en oeuvre d'un procédé selon l'une quelconque des revendications 1 à 9 sur un ou plusieurs dispositifs commandés par programme (1, 100, 200, 300).

12. Système de réseau (101) avec plusieurs dispositifs de réseau (1, 201, 301), qui sont couplés à un réseau de communication (6), dans lequel un dispositif de réseau respectif (1) comprend un premier dispositif de commande (2) et un premier dispositif de commutation (4) associé au premier dispositif de commande (2) et un deuxième dispositif de commande (3) et un deuxième dispositif de commutation (5) associé au deuxième dispositif de commande (3), dans lequel les dispositifs de commutation (4, 5) comportent chacun un port d'émission et de réception (9, 10, 13, 14) pour l'envoi et la réception de données via le réseau de communication (6), un premier port d'envoi et de réception interne (15, 16, 17, 18) pour l'envoi et la réception de données entre les dispositifs de commutation (4, 5) et un deuxième port d'envoi et de réception interne (7, 8, 11, 12) pour l'envoi et la réception de données avec le dispositif de commande (2, 3); dans lequel les dispositifs de réseau (1, 100, 200, 300) sont conçus pour mettre en oeuvre un procédé selon l'une quelconque des revendications 1 à 9.

13. Système de réseau (101) selon la revendication 12, dans lequel le premier et le deuxième dispositifs de commutation (4, 5) sont intégrés en un dispositif de commutation (104) dans au moins un dispositif de réseau (100).

14. Système de réseau (101) selon la revendication 12 ou 13, **caractérisé en ce qu'**au moins un dispositif de commutation (4) comprend un dispositif de classification (30), un dispositif de file d'attente (40) et un dispositif programmateur (31).

15. Système de réseau (102) selon l'une quelconque des revendications 12 à 14, **caractérisé en ce qu'**il est prévu des dispositifs de réseau simples (400) avec respectivement un dispositif de commande et un dispositif de commutation dans le système de réseau.

16. Système de réseau (101) selon l'une quelconque des revendications 12 à 14, **caractérisé en ce que** les dispositifs de réseau (1, 100, 200, 300) sont réalisés respectivement sous la forme de FPGA, ASIC, puce IC individuels ou de microcircuit câblé de façon fixe.
